(19) Europäisches Patentamt
European Patent Office
Office européen des brevets

(11) **EP 2 490 452 A1**

(12) **EUROPEAN PATENT APPLICATION**

(43) Date of publication:
**22.08.2012 Bulletin 2012/34**

(51) Int Cl.:
***H04N 13/00*** *(2006.01)*

(21) Application number: **11155117.2**

(22) Date of filing: **21.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Advanced Digital Broadcast S.A.**
**1292 Chambesy (CH)**

(72) Inventors:
• **Kobzda, Piotr**
  **65-119, Zielona Gora (PL)**
• **Lazarski, Wojciech**
  **65-119, Zielona Gora (PL)**

• **Szajna, Tomasz**
  **65-119, Zielona Gora (PL)**
• **Stanczyk, Piotr**
  **65-119, Zielona Gora (PL)**

(74) Representative: **Pawlowski, Adam**
**Eupatent.PL**
**Al. Kosciuszki 23/25**
**90-418 Lodz (PL)**

Remarks:
Amended claims in accordance with Rule 137(2) EPC.

(54) **A method and system for rendering a stereoscopic view**

(57)    A method for rendering a stereoscopic view, the method comprising the steps of defining a stereoscopic scene view (102) comprising representation of a scene object (112), receiving a left-eye texture (203) and a right-eye texture (206) for the scene object (112) and generating a left-eye scene view (101) comprising the left-eye texture applied to the representation of the scene object and the right-eye scene view (107) comprising a right-eye texture applied to the representation of the scene object. The method further comprises the steps of, prior to generating the left-eye scene view and the right-eye scene view, determining a value of the texture parallax (P1, P2) between the left-eye texture (203) and the right-eye texture (206) and offsetting the left-eye texture (203) and the right-eye texture (206) by a half of the value of the texture parallax (P1, P2) in opposite directions such as to provide an offset left-eye texture (601) and an offset right-eye texture (602) with a texture parallax equal to zero.

Fig. 1

EP 2 490 452 A1

**Description**

The present invention relates to a method and system for rendering a stereoscopic view. Such method may be applied to stereoscopy in general and more particularly to design and presentation of three-dimensional graphical user interfaces (GUI).

It is known from the US patent US6441815 "Method and system for high performance computer-generated virtual environments" that a stereoscopic system may employ a stereo pair of images as texture maps and apply them to a polygon situated in a given scene, i.e. at least 2 polygons - one for the left eye and one for the right eye. The image drawn for the right eye of the viewer uses the right-eye image from the stereo pair applied to a polygon beyond the portal frame. The left eye sees the identical environment from its perspective and the left-eye image from the stereo pair is applied to the polygon beyond the portal. Such solution achieves improved quality of rendered objects that gain depth in a three-dimensional scene. Additionally, it defines a two-step scene generation process, comprising pre-rendering and final rendering.

Experiments have shown that in special circumstances where pre-rendering of textures is utilized (for example photographs, computer graphics images, live video as defined in US6441815), scene objects may be situated such that despite their specific placement in a pre-rendered scene, the final rendering phase will result in a different apparent placement of the objects. Such situation will be referred herein as objects mixup. For example, object mixup may refer to a situation in which object A intended to be placed behind object B will be seen in the stereoscopic viewing system as being in front of the object B. This is a result of mixed instructions received by human brain with respect to depth cues present in the particular three-dimensional scene.

The experiments underlying the present invention have shown that the object mixup may be caused by texture parallax, namely a situation in which the right-eye texture and the left-eye texture of the object are different and have a parallax, i.e. a given characteristic point of the object is present on different positions at the left-eye texture and at the right-eye texture. The parallax depends on the distance between the object and the cameras as well as on the setting of cameras, their spread, toe-in angle, etc.

The technical problem of the prior art is that the known three-dimensional content presentation methods do not have mechanisms to prevent objects mixup when the textures of the object have a parallax. The patent US6441815 does not teach that textures parallax would lead to perceived objects mixup.

No other known documents disclose the above-mentioned objects mixup effect in a stereoscopic image and do not therefore anticipate the aforementioned problem on which the present invention is based.

The present invention aims to provide a method and system for rendering a stereoscopic view which avoid perceived objects mixup wherein object textures have parallax.

The object of the invention is a method for rendering a stereoscopic view, the method comprising the steps of defining a stereoscopic scene view comprising representation of a scene object, receiving a left-eye texture and a right-eye texture for the scene object and generating a left-eye scene view comprising the left-eye texture applied to the representation of the scene object and the right-eye scene view comprising a right-eye texture applied to the representation of the scene object. The method further comprises the steps of, prior to generating the left-eye scene view and the right-eye scene view, determining a value of the texture parallax between the left-eye texture and the right-eye texture and offsetting the left-eye texture and the right-eye texture by a half of the value of the texture parallax in opposite directions such as to provide an offset left-eye texture and an offset right-eye texture with a texture parallax equal to zero.

Determining the value of the texture parallax and offsetting the left-eye texture and the right-eye texture can be performed at a pre-rendering stage to provide the offset left-eye texture and the offset right-eye texture to be received for the scene object at the final rendering stage.

The value of the texture parallax can be determined at a pre-rendering stage to provide the left-eye texture and the right-eye texture and the value of the texture parallax to be received for the scene object at the final rendering stage.

The value of the texture parallax can be determined at a pre-rendering stage as a function of the relative positioning of the cameras, the scene object and the screen.

The region of the offset texture outside the original texture region can be filled with the screen image visible at the pre-rendering stage.

The value of the texture parallax of the textures received at the final rendering stage can be determined by image analysis.

The region of the offset texture outside the original texture region can be made transparent.

The value of texture parallax can be determined as a difference between position of a reference point of the scene object on the right-eye texture and on the left-eye texture.

The value of texture parallax can be determined as a minimum, maximum, average or median value of differences between positions of a plurality of reference points of the scene object on the right-eye texture and on the left-eye texture.

Another object of the invention is a computer program comprising program code means for performing all the steps of the method of the invention when said program is run on a computer, as well as a computer readable medium storing computer-executable instructions performing all the steps of the computer-implemented method of the invention when executed on a computer.

The object of the invention is also a system for rendering a stereoscopic view, the system comprising a scene composer configured to define a stereoscopic scene view comprising representation of a scene object and a scene generator configured to generate a left-eye scene view comprising the left-eye texture applied to the representation of the scene object and the right-eye scene view comprising a right-eye texture applied to the representation of the scene object. The system further comprises a texture recenterer configured to determine a value of the texture parallax between the left-eye texture and the right-eye texture and to offset the left-eye texture and the right-eye texture by a half of the value of the texture parallax in opposite directions such as to provide an offset left-eye texture and an offset right-eye texture with a texture parallax equal to zero and to provide the offset textures to the scene generator.

The texture recenterer and the scene generator may form a part of a final rendering subsystem.

The texture recenterer may form a part of a pre-rendering subsystem.

The invention will be described with reference to a drawing, in which:

> Fig. 1 presents a texture pre-generating setup;
> Fig. 2 presents pre-generated textures;
> Fig. 3 shows a scene arrangement for final rendering of the scene object;
> Fig. 4 shows the final rendering of the scene object with textures;
> Fig. 5 shows the final scene viewed on a stereoscopic display;
> Fig. 6 presents recentered pre-rendered textures;
> Fig. 7 shows a scene arrangement for final rendering of the scene object when pre-rendered textures are used;
> Fig. 8 shows a final scene with recentered textures;
> Fig. 9 shows a final scene with recentered textures and relation between scene object placement in space and apparent position of the textured scene object;
> Fig. 10 shows the steps of the method according to the invention, wherein the recentering is performed at the final rendering stage;
> Fig. 11 shows the steps of the method according to the invention, wherein the recentering is performed at the pre-rendering stage.
> Fig. 12 presents the concept of texture parallax.
> Fig. 13 shows an embodiment of a system for rendering a stereoscopic view according to the invention.

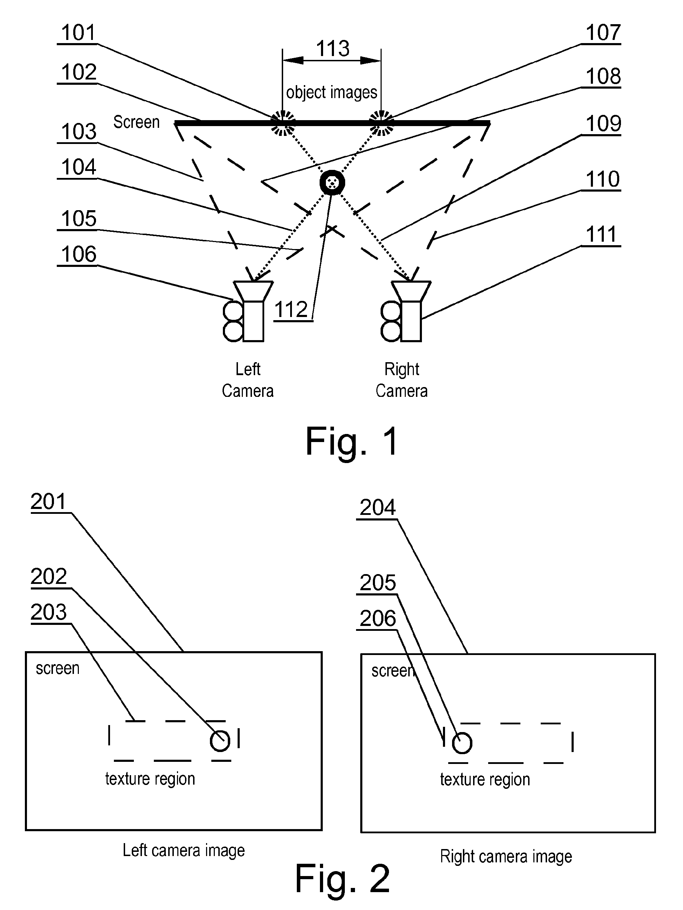

Fig. 1 presents a texture pre-generating setup. Texture mapping, as known in the computer graphics art, is based on applying a texture (an image) onto a displayed representation of a scene object (a virtual object).

In order to achieve realistic appearance of the scene object, the applied texture modifies the visual properties of the scene object. The texture is usually created by complex rendering or by photographing a real object and then providing its digital representation i.e. a graphical file comprising the texture.

In a stereoscopic environment there is provided a separate scene object and a separate texture for each eye. The scene view 102 received by the right camera 111 comprises representation of the object 112 in place 101 whereas the scene view 102 received by the left camera 106 comprises representation of the object 112 in place 107. As can be seen on Fig. 1, the same object 112 is rendered in different positions 101, 107 (this effect may also apply to parts of an object), which results in a parallax 113. When the left-eye and right-eye images are displayed as a stereoscopic signal, the viewer perceives the object to be in front of the screen plane 102.

The left camera 106 has a field of view defined by lines 103 and 105 and the right camera 111 has a field of view defined by lines 108 and 110. The cameras 106, 111 view the object 112 from different angles 104 and 109 which results, in the present case, in a negative object parallax 113 (defined as the difference between the position of the object on the right-eye scene 101 and on the left-eye scene 107) and in that the object 112 is seen as being in front of the screen plane 102. Such cameras arrangement is used to capture texture images of the object 112 for both eyes. The left camera 106 will capture a texture for the left eye while the right camera 111 will capture a texture for the right eye. These textures will be later used to generate a stereoscopic imaginery at an image generating device. The image generating device will utilize pre-generated textures, i.e. textures captured or pre-rendered prior to the image generation process. Hence, the full scene generation process is a two-step procedure, namely it comprises the steps of pre-rendering and final rendering.

Fig. 2 presents pre-generated textures. The view 201 is a scene view captured by the left camera 106 and the view 204 is a scene view captured by the right camera 111. The texture region 203, 206 can comprise more image data than the object itself 202, 205.

Both cameras see identical environment from different perspectives. In order to extract textures, according to a typical method known from the prior art, the same part of the environment is selected from the full scene. As seen on Fig. 2, the texture region 203, 206 remains fixed between views 201 and 204 and the object placement varies between views 201 and 204, thereby achieving perspective in the rendered view. This results in a texture parallax, i.e. the difference in position of the object on the right-eye texture 206 and on the left-eye texture 203.

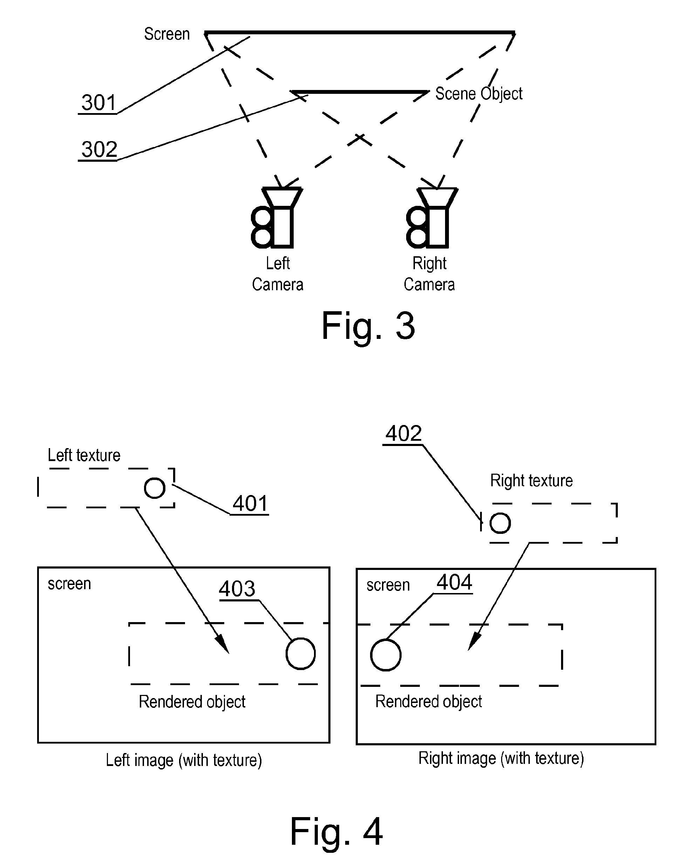

Fig. 3 shows a scene arrangement for final rendering of the scene object. In a typical environment, such as a 3D television GUI screen, scene objects, such as television channel banners, will be placed in a stereoscopic scene context. The exemplary channel banner 302 in Fig. 3 is situated such that it appears to be in front of the screen 301. The scene object 302 will typically be defined as two polygons, one for each eye, to be textured with pre-rendered textures or one polygon with two different textures, one texture for each eye.

Fig. 4 shows the final rendering of the scene object with textures. Using the scene arrangement as defined in Fig. 3 and captured textures as defined with reference to Fig. 2, the final scene is rendered. The left texture 401 is applied to the left polygon defining the scene object. In this example the texture 401 must be upscaled to fit the left polygon. In a similar manner, the right texture 402 is applied to the right polygon defining the scene object. In this example the texture 402 must be upscaled to fit the right polygon.

As can be seen, representations of the scene object 403, 404 appear in Fig. 4 closer to the edge of the respective screen planes than in Fig. 2. Hence, the relative placement of the left-eye and right-eye textures on the screen is changed.

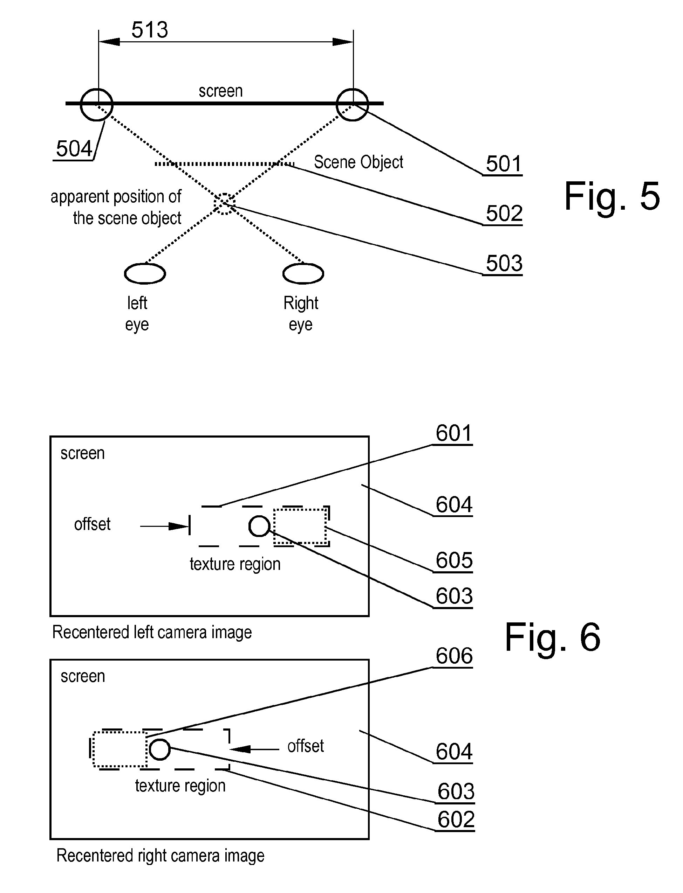

Fig. 5 shows the final scene rendered according to a typical method known from the prior art. The left-eye representation 501 of the scene object and the right-eye representation 504 of the scene object are much further away from each other than the representations 101 and 107 of the scene object of Fig. 1, thus the object parallax 513 on Fig. 5 (defined a difference between positions of the representations 501 and 504 of the scene object) has a greater magnitude than the object parallax 113 of Fig. 1. Therefore, the object, which was intended to be positioned at plane 502 appears to be positioned at position 503. Such situation is problematic, since the scene arrangement after final rendering is unpredictable or confusing at best, and scene objects are not positioned as intended by the image designer. Different texture parallaxes will result in different apparent positioning of scene objects. Since textures may be supplied by different vendors, may be updated or may have texture parallax that cannot be adjusted, it is difficult to arrange a stereoscopic scene when different scene objects have different texture parallaxes. On the other hand, the disparity between the left-eye and the right-eye textures must be maintained, as otherwise the quality of the third dimension would be greatly reduced.

The prior art systems recognized improvement of quality when using textures with parallax but failed to identify that in certain situations the texture parallax causes problems of significant relevance in a process of stereoscopic imaginery development. Such specific situations were not recognized by the prior art systems.

The present invention utilizes a concept, which will be called hereinafter as recentering, to compensate potential object parallax when object textures have a texture parallax. Recentering limits the contradicting depth cues throughout the whole image irrespective of scene objects placement or grouping.

Fig. 6 presents recentered pre-rendered textures. The aim of recentering is to extract textures with object's depth but without positioning as in the case of fixed texture region as shown in Fig. 2. Extracting as in Fig 2 includes both depth and positioning coefficient i.e. perceiving the object at some location in front of the screen.

In a standard method for rendering a stereoscopic view, a stereoscopic scene view is defined with a representation of a scene object. Next, there are generated a left-eye scene view comprising a left-eye texture applied to the representation of the scene object and a right-eye scene view comprising a right-eye texture applied to the representation of the scene object.

The present method enhances the steps of the standard rendering method in that prior to generating the left-eye scene view and the right-eye scene view, the textures are recentered. Recentering involves determining a value of the texture parallax between the left-eye texture and the right-eye texture and offsetting the textures by a half of the value of the texture parallax in opposite directions such as to provide textures with no texture parallax, as shown in Fig. 6.

The object 603 is positioned relative to screen 604 as in Fig. 2, but the offset texture region 601 for left camera, and the offset texture region 602 for right camera, are offset with respect to Fig. 2, such that the object 603 is positioned at the same place at both textures, therefore there is no texture parallax. The offset texture regions 601, 602 are offset with respect to the regions shown in Fig. 2 by a half of the value of the texture parallax of Fig. 2. In the final rendering stage, the placement of the object in the three-dimensional space will not be influenced by the pre-rendering stage setup.

An exemplary practical implementation example may apply to a situation when a textures supplier first renders textures for a defined environment. Later, a GUI designer may design a scene in which stereoscopic objects are placed. It often will be the case that the object used for textures prerendering will not be situated in the same place in the designed scene. Therefore, a further step is necessary that will prevent objects to be rendered such that they would appear in the scene at locations other than the GUI designer selected.

The texture parallax can be determined either by image analysis or by calculations at the pre-rendering stage, when the positioning of the object with respect to the screen and the cameras is known.

The following equation can be used:

$$d / D = IPD / (IPD - img)$$

wherein
d is a distance of the cameras from the object,
D is a distance of the cameras from the screen,
IPD is the spacing between the cameras and
img is the texture parallax.

Therefore,

$$img = IPD - IPD * D / d.$$

The distance of the cameras from the object may be defined in various ways, as the object is not a single point and may have an area variable with respect to the depth coordinate. For example the distance may be calculated to the closest point of the object, to the farthest point of the object or to the middle point of the object. The choice is made by the scene designer.

After the texture parallax is calculated, the textures may be provided to the rendering engine together with the value of the texture parallax. Alternatively, the textures may be offset in the pre-rendering stage so as to obtain textures with no parallax and the offset textures may be provided to the rendering engine.

Another method may estimate or compute the texture parallax value by analyzing the pre-generated textures. The final rendering engine will then offset the textures by half of the texture parallax prior to rendering the scene.

It is to be noted that the pre-rendering and final rendering stages can be performed either on one device or on different devices. For example, prerendering can be executed on a personal computer or workstation, while the final rendering can be executed on a set-top box, a smartphone, television set or a tablet device.

When the textures are offset at the pre-rendering stage, the region 605, 606 of the offset texture outside the original texture region 203, 206 can be filled with the screen image visible at the pre-rendering stage.

When the textures are offset at the final rendering stage, the region 605, 606 of the offset texture outside the original texture region 203, 206 can be made transparent such as to be filled with the background image.

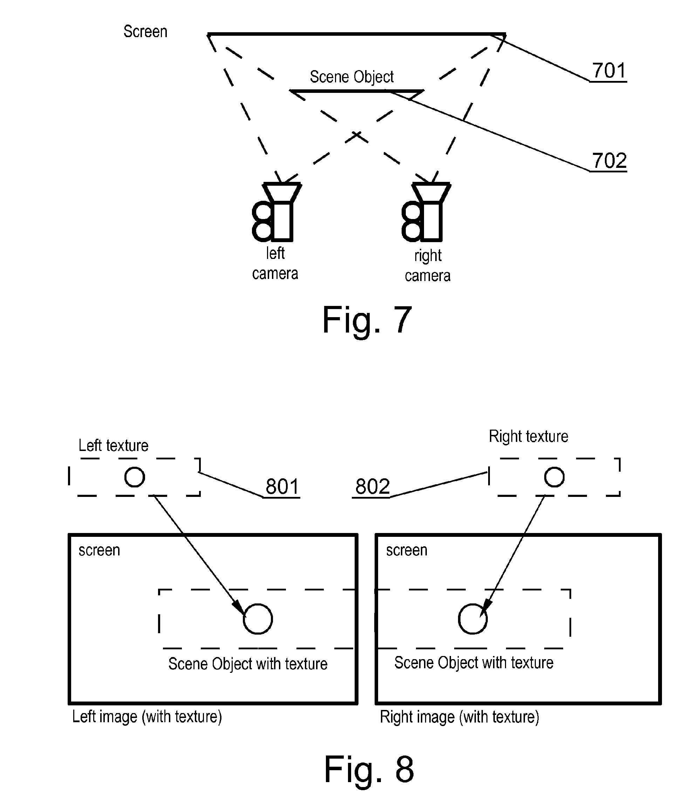

Fig. 7 shows a scene arrangement for final rendering of the scene object when pre-rendered textures are used. The scene object 702 is positioned in the scene and by application of the offset texture regions 601, 602 offset in the prerendering stage the apparent position of the object, perceived by a viewer, is the same as the position of the object in a given scene displayed on the screen 701.

Fig. 8 shows a final scene with recentered textures. As can be readily seen the parallax of the offset textures 801, 802 has been eliminated in the prerendering stage and only object parallax is present in the scene. Hence, the distance between left and right eye objects is less than in case of scene presented in Fig. 4 where the pre-rendering has not been employed.

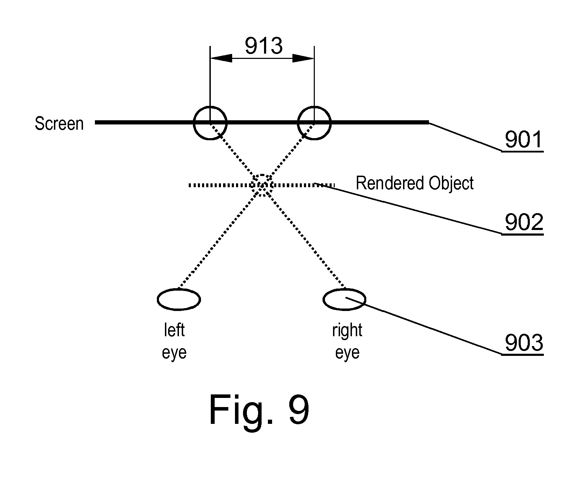

Fig. 9 shows a final scene on the screen 901 with recentered textures and relation between scene object placement in space and apparent position of the textured scene object 902. With the recentering process, the relative positions of the scene objects are preserved.

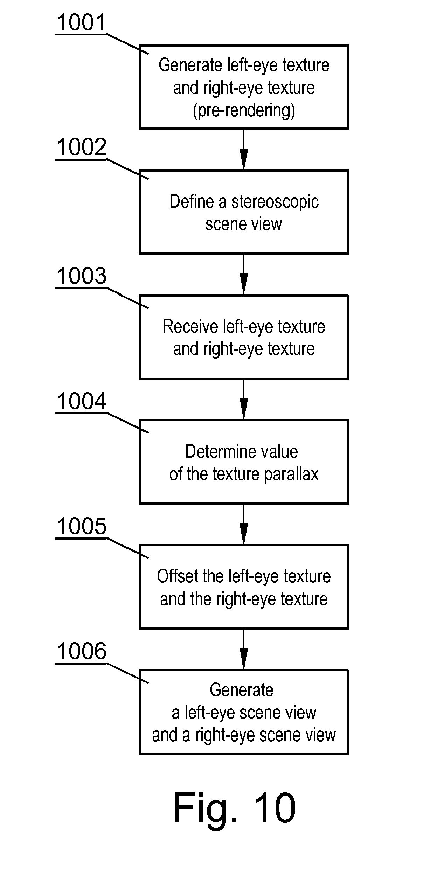

Fig. 10 shows the steps of the method according to the invention, wherein the recentering is performed at the final rendering stage. In step 1001, prerendering is performed, i.e. the left-eye texture and the right-eye texture for an object are generated. The textures may have a texture parallax. In step 1002, which starts the final rendering stage, a stereoscopic scene view is defined comprising representation of a scene object. Next, in step 1003, the left-eye texture and the right-eye texture are received for the scene object. Then, in step 1004, the value of the texture parallax between the left-eye texture and the right-eye texture is determined. The left-eye texture and the right-eye texture are offset in step 1005 by a half of the value of the texture parallax in opposite directions such as to provide textures with no texture parallax. Finally, in step 1006 a left-eye scene view is generated comprising the left-eye texture applied to the representation of the scene object and the right-eye scene view comprising a right-eye texture applied to the representation of the scene object.

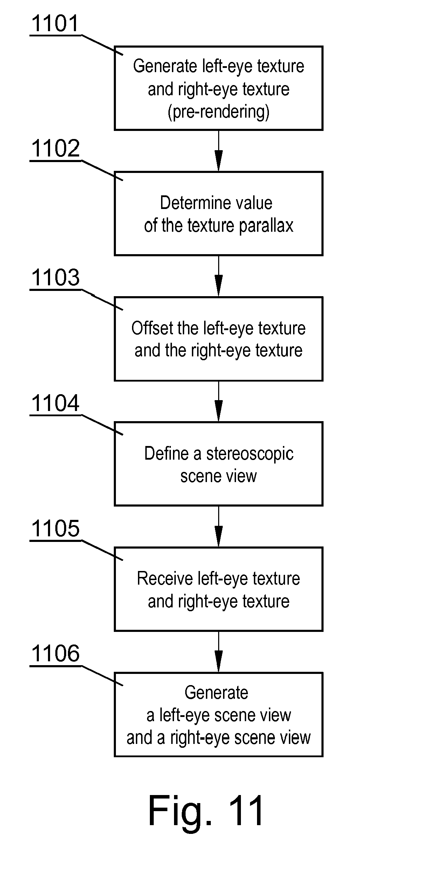

Fig. 11 shows the steps of the method according to the invention, wherein the recentering is performed at the pre-rendering stage. In step 1101, prerendering is performed, i.e. the left-eye texture and the right-eye texture for an object are generated. The textures may have a texture parallax. Then, in step 1102, the value of the texture parallax between the left-eye texture and the right-eye texture is determined, either by analyzing the texture images or by calculating a function based on the relative positioning of the cameras, the object and the screen. The left-eye texture and the right-eye texture are then offset in step 1103 by a half of the value of the texture parallax in opposite directions such as to provide textures with no texture parallax. In step 1104, which starts the final rendering stage, a stereoscopic scene view is defined comprising representation of a scene object. Next, in step 1105, the left-eye texture and the right-eye texture are received for the scene object. Finally, in step 1106 a left-eye scene view is generated comprising the left-eye texture applied to the representation of the scene object and the right-eye scene view comprising a right-eye texture applied to the representation of the scene object.

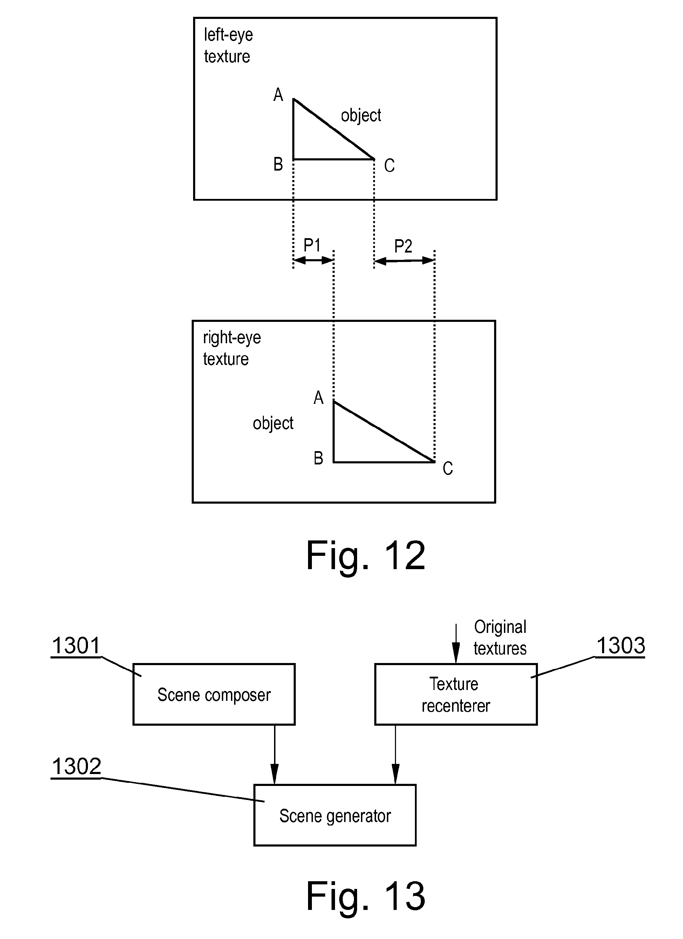

Fig. 12 presents the concept of texture parallax. In this example the stereoscopic texture is a stereoscopic image of a triangle in a three- dimensional space. The stereoscopic parallax in a given point of the texture is a difference between its absolute position on the left-eye texture and the absolute position of corresponding point on the right-eye texture. For instance — the texture parallax of point A of the triangle is P1, defined as the difference between position of point A on the left-eye texture, and position of corresponding point A on right-eye texture. Point B has the same texture parallax P1. The texture parallax of point C is P2 and it differs from P1. This means, that in the stereoscopic view the in-depth positions of points A and B are different than the in-depth position of point C.

In another embodiment, when a depth map for the stereoscopic texture is available, the values of parallaxes of each point of the texture may be easily computed from the aforementioned equation: d / D = IPD / (IPD — img), wherein d is the distance to the object, D is the distance to the screen, IPD is interpupiliar distance and img is the stereoscopic parallax. If the stereoscopic textures are being created in controlled environment, for instance when they are being rendered by means of computer generated imaginary, the exact values of the stereoscopic parallaxes may be known apriori.

Given the values of parallaxes in various points of the stereoscopic texture, the reference texture parallax value used for the offset of textures to perform recentering may be chosen as the image minimal parallax, maximal parallax, average parallax, median parallax or by any other convention.

Although determining of stereoscopic parallaxes on the stereoscopic texture is a non-trivial problem, there are various solutions for depth map estimation and stereo matching. Examples of those methods are presented in US2003/0231792A1 System and Method for Progressive Stereo Matching of Digital Images, US5577130 Method and Apparatus for Determining the Distance between an Image and an Object, US7333652B2 System and Method for Efficiently Performing a Depth Map Recovery Procedure. Further information may be found in publication: Gaël Sourimant, "Depth maps estimation and use for 3DTV", Technical Report num. 0379, INRIA Rennes Bretagne Atlantique, Rennes, France, February 2010.

Fig. 13 shows an embodiment of a system for rendering a stereoscopic view according to the invention. The system comprises a scene composer 1301 configured to define the stereoscopic scene view 102 comprising representation of the scene object 112. A scene generator 1302 is configured to generate the left-eye scene view 101 comprising the left-eye texture applied to the representation of the scene object and the right-eye scene view 107 comprising the right-eye texture applied to the representation of the scene object. A texture recenterer 1303 is configured to determine the value of the texture parallax P1, P2 between the left-eye texture 203 and the right-eye texture 206 and to offset the left-eye texture 203 and the right-eye texture 206 by a half of the value of the texture parallax P1, P2 in opposite directions such as to provide an offset left-eye texture 601 and an offset right-eye texture 602 with a texture parallax equal to zero and to provide the offset textures 601, 602 to the scene generator 1302. The texture recenterer 1303 and the scene generator 1302 may form a part of a final rendering subsystem. Alternatively, the texture recenterer 1303 may form a part of a pre-rendering subsystem.

It can be easily recognized, by one skilled in the art, that the aforementioned method for rendering a stereoscopic view may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. The stereoscopic view generating device i.e. a TV set or a set top box according to the present invention, optionally comprises such a memory. These memories are exemplary recording media for storing computer programs comprising computer-executable instructions performing all the steps of the computer-implemented method according the technical concept presented herein.

The present invention may be implemented using any display, for example on a computer monitor, a television display, a stereoscopic projector.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for rendering a stereoscopic view, the method comprising the steps of:

   - defining a stereoscopic scene view (102) comprising representation of a scene object (112),
   - receiving a left-eye texture (203) and a right-eye texture (206) for the scene object (112),
   - generating a left-eye scene view (101) comprising the left-eye texture applied to the representation of the scene object and the right-eye scene view (107) comprising a right-eye texture applied to the representation of the scene object,

   **characterized in that** it further comprises the steps of, prior to generating the left-eye scene view and the right-eye scene view,

   - determining a value of the texture parallax (P1, P2) between the left-eye texture (203) and the right-eye texture (206),
   - offsetting the left-eye texture (203) and the right-eye texture (206) by a half of the value of the texture parallax (P1, P2) in opposite directions such as to provide an offset left-eye texture (601) and an offset right-eye texture (602) with a texture parallax equal to zero.

**2.** The method according to claim 1, **characterized by** determining the value of the texture parallax (P1, P2) and offsetting the left-eye texture (203) and the right-eye texture (204) at a pre-rendering stage to provide the offset left-eye texture (601) and the offset right-eye texture (602) to be received for the scene object at the final rendering stage.

**3.** The method according to claim 1, **characterized by** determining the value of the texture parallax (P1, P2) at a pre-rendering stage to provide the left-eye texture (203) and the right-eye texture (204) and the value of the texture parallax (P1, P2) to be received for the scene object at the final rendering stage.

**4.** The method according to claim 2 or 3, **characterized by** determining the value of the texture parallax (P1, P2) at a pre-rendering stage as a function of the relative positioning of the cameras (106, 111), the scene object (112) and the screen (102).

**5.** The method according to any of claims 2-4, **characterized by** filling the region (605, 606) of the offset texture (601, 602) outside the original texture region (203, 206) with the screen image visible at the pre-rendering stage.

**6.** The method according to claim 1, **characterized by** determining the value of the texture parallax (P1, P2) of the textures received at the final rendering stage by image analysis.

**7.** The method according to claim 6, **characterized by** making the region (605, 606) of the offset texture (601, 602) outside the original texture (203, 206) region transparent.

**8.** The method according to any of previous claims, **characterized by** determining the value of texture parallax as a difference (P1, P2) between position of a reference point of the scene object on the right-eye texture (206) and on the left-eye texture (203).

**9.** The method according to any of previous claims, **characterized by** determining the value of texture parallax as a minimum, maximum, average or median value of differences (P1, P2) between positions of a plurality of reference points of the scene object on the right-eye texture (206) and on the left-eye texture (203).

**10.** A computer program comprising program code means for performing all the steps of the method as claimed in any of claims 1 to 9 when said program is run on a computer.

**11.** A computer readable medium storing computer-executable instructions performing all the steps of the computer-implemented method according to any of claims 1 to 7 when executed on a computer.

**12.** A system for rendering a stereoscopic view, **characterized in that** it comprises:

> - a scene composer (1301) configured to define a stereoscopic scene view (102) comprising representation of a scene object (112),
> - a scene generator (1302) configured to generate a left-eye scene view (101) comprising the left-eye texture applied to the representation of the scene object and the right-eye scene view (107) comprising a right-eye texture applied to the representation of the scene object,

**characterized in that** it further comprises,

> - a texture recenterer (1303) configured to determine a value of the texture parallax (P1, P2) between the left-eye texture (203) and the right-eye texture (206) and to offset the left-eye texture (203) and the right-eye texture (206) by a half of the value of the texture parallax (P1, P2) in opposite directions such as to provide an offset left-eye texture (601) and an offset right-eye texture (602) with a texture parallax equal to zero and to provide the offset textures (601, 602) to the scene generator (1302).

**13.** The system according to claim 12, the texture recenterer (1303) and the scene generator (1302) form a part of a final rendering subsystem.

**14.** The system according to claim 12, wherein the texture recenterer (1303) forms a part of a pre-rendering subsystem.

101
102
103
104
105
106

113

object images

Screen

107
108
109
110
111

112

Left
Camera

Right
Camera

# Fig. 1

201

202
203

screen

texture region

Left camera image

204

205
206

screen

texture region

Right camera image

# Fig. 2

Screen

301

302

Scene Object

Left
Camera

Right
Camera

# Fig. 3

Left texture

401

402

Right texture

screen

403

Rendered object

Left image (with texture)

screen

404

Rendered object

Right image (with texture)

# Fig. 4

513

screen

504

apparent position of
the scene object

Scene Object

501

502

503

Fig. 5

left
eye

Right
eye

601

screen

offset

604

605

texture region

603

Recentered left camera image

Fig. 6

606

screen

604

offset

texture region

603

602

Recentered right camera image

Screen

Scene Object

701

702

left
camera

right
camera

# Fig. 7

Left texture

Right texture

801

802

screen

screen

Scene Object with texture

Scene Object with texture

Left image (with texture)

Right image (with texture)

# Fig. 8

Fig. 9

1001

Generate left-eye texture
and right-eye texture
(pre-rendering)

1002

Define a stereoscopic
scene view

1003

Receive left-eye texture
and right-eye texture

1004

Determine value
of the texture parallax

1005

Offset the left-eye texture
and the right-eye texture

1006

Generate
a left-eye scene view
and a right-eye scene view

Fig. 10

1101

Generate left-eye texture
and right-eye texture
(pre-rendering)

1102

Determine value
of the texture parallax

1103

Offset the left-eye texture
and the right-eye texture

1104

Define a stereoscopic
scene view

1105

Receive left-eye texture
and right-eye texture

1106

Generate
a left-eye scene view
and a right-eye scene view

Fig. 11

left-eye
texture

A

object

B        C

P1          P2

right-eye
texture

A

object

B

C

# Fig. 12

1301

Original
textures

1303

Scene composer

Texture
recenterer

1302

Scene generator

# Fig. 13

Europäisches
Patentamt

European
Patent Office

Office européen
des brevets

**EUROPEAN SEARCH REPORT**

Application Number

EP 11 15 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/046824 A1 (KONINKL PHILIPS ELECTRONICS NV [NL]; BARENBRUG BART G B [NL]; VANDERHE) 29 April 2010 (2010-04-29)<br>* figure 3 *<br>* page 8, line 1 - line 26 *<br>----- | 1-14 | INV.<br>H04N13/00 |
| A | WO 2005/060271 A1 (UNIV DURHAM [GB]; HOLLIMAN NICOLAS STEVEN [GB])<br>30 June 2005 (2005-06-30)<br>* abstract *<br>----- | 1,10-12 | |
| A | US 2010/302355 A1 (TAMARU MASAYA [JP])<br>2 December 2010 (2010-12-02)<br>* abstract *<br>----- | 1,10-12 | |
| A | US 2004/233275 A1 (TOMITA SEIJIRO [JP])<br>25 November 2004 (2004-11-25)<br>* abstract *<br>----- | 1,10-12 | |

TECHNICAL FIELDS
SEARCHED      (IPC)

H04N

The present search report has been drawn up for all claims

| Place of search | Date of completion of the search | Examiner |
|---|---|---|
| The Hague | 5 July 2011 | Cooke, Edward |

EPO FORM 1503 03.82 (P04C01)

**ANNEX TO THE EUROPEAN SEARCH REPORT
ON EUROPEAN PATENT APPLICATION NO.**

EP 11 15 5117

This annex lists the patent family members relating to the patent documents cited in  the above-mentioned European search report.
The members are as contained in the European Patent Office EDP file on
The European Patent Office is in no way liable for these particulars which are merely given for the purpose of information.

05-07-2011

| Patent document cited in search report | | | Publication date | Patent family member(s) | | Publication date |
|---|---|---|---|---|---|---|
| WO 2010046824 | A1 | 29-04-2010 | NONE | | | |
| WO 2005060271 | A1 | 30-06-2005 | AT | 511315 T | 15-06-2011 |
| | | | | EP | 1704730 A1 | 27-09-2006 |
| | | | | US | 2009268014 A1 | 29-10-2009 |
| | | | | US | 2007247522 A1 | 25-10-2007 |
| US 2010302355 | A1 | 02-12-2010 | JP | 2010278878 A | 09-12-2010 |
| US 2004233275 | A1 | 25-11-2004 | AU | 2003221143 A1 | 11-10-2004 |
| | | | | WO | 2004084560 A1 | 30-09-2004 |

EPO FORM P0459

For more details about this annex : see Official Journal of the European Patent Office, No. 12/82

**EP 2 490 452 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6441815 B
- US 20030231792 A1
- US 5577130 A
- US 7333652 B2